Europäisches Patentamt

European Patent Office

Office européen des brevets

(19)

(11) Veröffentlichungsnummer: **0 389 875**

**A2**

(12) **EUROPÄISCHE PATENTANMELDUNG**

(21) Anmeldenummer: **90104924.7**

(22) Anmeldetag: **15.03.90**

(51) Int. Cl.5: **B60D 1/04**

(30) Priorität: **28.03.89 DE 3910004**

(43) Veröffentlichungstag der Anmeldung:
**03.10.90 Patentblatt 90/40**

(84) Benannte Vertragsstaaten:
**DE FR GB IT SE**

(71) Anmelder: **ROCKINGER Spezialfabrik für Anhängerkupplungen GmbH & Co.**
**Waldmeisterstrasse 80 Postfach 45 04 64**
**D-8000 München 45(DE)**

(72) Erfinder: **Glässner, Ralf**
**Schweidnitzer Strasse 41**
**D-8000 München 50(DE)**
Erfinder: **Baumgartner, Richard**
**Lichtenweg 15**
**D-8254 Isen(DE)**
Erfinder: **Schnabl, Paul**
**Waldrebenstrasse 2**
**D-8000 München 45(DE)**

(74) Vertreter: **Weickmann, Heinrich, Dipl.-Ing. et al**
**Patentanwälte H. Weickmann, Dr. K. Fincke F.A. Weickmann, B. Huber Dr. H. Liska, Dr. J. Prechtel Möhlstrasse 22 Postfach 860 820**
**D-8000 München 86(DE)**

(54) **Hakenanhängerkupplung Stichwort: Hakenkupplung mit stabilisierter Auskupplungsbereitschafsstellung.**

(57) Es wird eine Zughakenanhängerkupplung vorgeschlagen, bei welcher die Betätigungs- und Sicherungsmechanik 18 dann in einen stabilen Auskupplungsbereitschaftszustand überführbar ist, wenn der Zughaken 14 durch Einfahrdruck der Zugöse 34 in seiner Einkupplungsstellung blockiert ist und bei der sodann der Zughaken 14 in seine Auskupplungsstellung übergehen kann, wenn der Zugöseneinfahrdruck aufhört, wobei dann die Betätigungs- und Sicherungsmechanik als Folge des Übergangs des Zughakens 14 in seine Auskupplungsstellung in einen Einkupplungsbereitschaftszustand übergeht.

Fig.1

EP 0 389 875 A2

## Hakenanhängerkupplung

Stichwort: Hakenkupplung mit stabilisierter Auskupplungsbereitschaftsstellung

Die Erfindung betrifft eine Hakenanhängerkupplung mit einem Kupplungskörper, einem in dem
Kupplungskörper um eine Schwenkachse zwischen
einer Einkupplungsstellung und einer Auskupplungsstellung schwenkbaren Zughaken und einer
Betätigungs- und Sicherungsmechanik für den
Zughaken,
wobei der zum Ankuppeln einer Zugöse bestimmte
und ausgebildete Zughaken durch Eingriff mit der
Zugöse zwischen der Einkupplungsstellung und
der Auskupplungsstellung verschwenkbar ist, und
zwar so, dass die einfahrende Zugöse eine Verschwenkung des Zughakens in Richtung Einkupplungsstellung bewirkt und die ausfahrende Zugöse
und/oder die Schwerkraft eine Verschwenkung des
Zughakens in Richtung Auskupplungsstellung bewirkt,
wobei weiter der Zughaken in der Einkupplungsstellung durch die dann in einem Sicherungszustand befindliche Betätigungs-und Sicherungsmechanik sicherbar ist,
wobei weiter die Betätigungs- und Sicherungsmechanik durch Einwirken einer äusseren Lösekraft
aus dem Sicherungszustand ausrückbar und als
Folge hiervon der Zughaken in die Auskupplungsstellung überführbar ist,
wobei weiter in der Auskupplungsstellung des Zughakens die Betätigungs- und Sicherungsmechanik
in einem Einkupplungsbereitschaftszustand ist
und wobei als Folge des Zurückstellens des Zughakens in die Einkupplungsstellung die
Betätigungs- und Sicherungsmechanik aus dem
Einkupplungsbereitschaftszustand in den Sicherungszustand überführbar ist.

Eine solche Hakenanhängerkupplung ist durch
eine offenkundige Vorbenutzung der Firma Ringfeder GmbH Krefeld-Uerdingen mit der Typenbezeichnung RUwg bekannt.

Bei der bekannten Ausführungsform umfasst
die Betätigungs-und Sicherungsmechanik für den
Zughaken einen Steuerhebel, welcher an dem
Kupplungskörper über eine Gelenklasche gelagert
ist und zwar so, dass einerseits der Steuerhebel an
der Gelenklasche gelagert ist und andererseits die
Gelenklasche an dem Kupplungskörper gelagert
ist; zum dritten ist der Steuerhebel mit dem Zughaken gelenkig verbunden.

Wenn bei dieser bekannten Ausführungsform
der Zughaken aus der Einkupplungsstellung in die
Auskupplungsstellung übergeführt werden soll, so
wird der Steuerhebel aus dem Sicherungszustand
ausgeschwenkt und der Zughaken führt als Folge
der Schwenkbewegung des Steuerhebels eine Bewegung in Richtung auf seine Auskupplungsstellung aus. Jeder Zustand des Steuerhebels bestimmt eindeutig eine Stellung des Zughakens.

Wenn der Zughaken seine Auskupplungsstellung erreicht hat, befindet sich der Steuerhebel
zwangsläufig in dem Einkupplungsbereitschaftszustand. Wenn die Zugöse bei dieser bekannten Ausführungsform ausgekuppelt werden soll, während
sie unter Einfahrdruck an dem Zughaken anliegt,
so müsste bei der Bewegung des Steuerhebels in
Richtung auf seinen Einkupplungsbereitschaftszustand der Zughaken ständig bewegt werden, nämlich in Richtung auf seine Auskupplungsstellung.
Andererseits übt aber die Zugöse durch ihren Einfahrdruck ein Moment auf den Zughaken aus, welches diesen entsprechend den gewünschten Verhältnissen beim Einkuppelvorgang in Richtung auf
seine Einkupplungsstellung zu bewegen sucht. Aus
diesem Grunde wird die Bewegung des Steuerhebels blockiert. Die Blockierung kann nur mit sehr
grosser Krafteinwirkung auf den Steuerhebel überwunden werden, etwa mittels einer an den Steuerhebel angelegten Brechstange, die ein solches Moment an den Steuerhebel anzulegen gestattet, dass
die Zugöse durch die daraus folgende Bewegung
des Zughakens zurückgeschoben werden kann.

Der Erfindung liegt die Aufgabe zugrunde, eine
Hakenanhängerkupplung der eingangs bezeichneten Art so auszugestalten, dass die Überführung
des Zughakens aus der Einkupplungsstellung in die
Auskupplungsstellung bei Zugöseneinfahrdruck auf
den Zughaken erleichtert ist.

Zur Lösung dieser Aufgabe wird erfindungsgemäss vorgeschlagen, dass die Betätigungs- und
Sicherungsmechanik in ihrer Verbindung mit dem
Zughaken kinematisch derart unterbestimmt ist,
dass sie bei durch Zugöseneinfahrdruck bewirkter
Blockierung des Zughakens in seiner Einkupplungsstellung durch die Lösekraft in einen stabilen
Auskupplungsbereitschaftszustand einstellbar ist,
welcher zwischen ihrem Sicherungszustand und ihrem Einkupplungsbereitschaftszustand gelegen ist,
dass in dem Auskupplungsbereitschaftszustand der
Betätigungs-und Sicherungsmechanik der Zughaken frei ist für eine durch Aufhebung des Zugöseneinfahrdrucks auszulösende Überführung in seine
Auskupplungsstellung,
dass durch eine solche Überprüfung des Zughakens in die Auskupplungsstellung die Betätigungs-
und Sicherungsmechanik selbsttätig in den Einkupplungsbereitschaftszustand überführbar ist
und dass der Eintritt, jedenfalls aber das Verharren
der Betätigungs- und Sicherungsmechanik in dem stabilen Auskupplungsbereitschaftszustand bei ihrem Übergang von ihrem Einkupplungsbereitschaftszustand in ihren Sicherungszustand unterdrückt ist.

Bei der erfindungsgemässen Lösung ist es also möglich, zur Vorbereitung des Auskuppelvorgangs die Betätigungs- und Sicherungsmechanik zunächst in den Auskupplungsbereitschaftszustand zu bringen, ohne dass eine Bewegung auf den Zughaken übertragen wird und die Betätigungs- und Sicherungsmechanik in dem Auskupplungsbereitschaftszustand ohne fortgesetzte Einwirkung der äusseren Lösekraft, also etwa einer von Hand ausgeübten Lösekraft, festzuhalten. Wenn dann in dieser Situation das Zugfahrzeug mit dem Kupplungskörper vorfährt, so hört der vorher auf den Zughaken von der Zugöse ausgeübte Zugöseneinfahrdruck auf. Es tritt eine Auszugskraft auf. Diese Auszugskraft erzeugt im weiteren Verlauf der Vorfährt des Zugfahrzeugs ein Moment, welches den Zughaken in Richtung auf seine Auskupplungsstellung zu schwenken sucht. Diese Schwenkbewegung ist möglich, weil der Zughaken nach Eintritt der Betätigungs- und Sicherungsmechanik in den Auskupplungsbereitschaftszustand nicht mehr gesichert ist. Es sind also auch bei Zugöseneinfahrdruck keine wesentlichen Kräfte an der Kupplung mehr aufzubringen, um den Auskupplungsvorgang durchzuführen. Es sei hier vermerkt, dass bei Belastung des Zughakens durch die Zugöse im Auszugssinne dann beim Auskuppeln immer noch eine erhebliche Lösekraft auf den Steuerhebel notwendig sein kann, wenn die Sicherungs- und Betätigungsmechanik in dem Sicherungszustand eine Übertotpunktlage einnimmt. Diese Erscheinung tritt aber auch bei der bekannten Ausführungsform auf. Im übrigen ist diese Situation weniger kritisch, da in der Regel zur Überwindung einer solchen Übertotpunktlage nur eine sehr kleine Bewegung des Zughakens erzwungen werden muss.

Die erfindungsgemässe Hakenanhängerkupplung kann dahin weitergebildet werden, dass bei fehlendem Zugöseneinfahrdruck auf den in Einkupplungsstellung befindlichen Zughaken die Betätigungs- und Sicherungsmechanik von dem Sicherungszustand bis in den Einkupplungsbereitschaftszustand durchstellbar ist unter gleichzeitiger Überführung des Zughakens aus der Einkupplungsstellung in die Auskupplungsstellung. Dann vollzieht sich der Auskupplungsvorgang etwa bei nicht eingekuppelter Zugöse oder bei nicht belasteter Zugöse im wesentlichen genauso wie der bei der eingangs behandelten Hakenanhängerkupplung.

Eine andere Weiterbildungsmöglichkeit liegt darin, dass Stabilisierungsmittel in Form einer Übertotpunktfederung vorgesehen sind, welche im Zusammenwirken mit dem durch Zugöseneinfahrdruck in der Einkupplungsstellung blockierten Zughaken den Auskupplungsbereitschaftszustand der Betätigungsund Sicherungsmechanik festlegen, gegebenenfalls aber auch für die Einstellung der Betätigungs- und Sicherungsmechanik in den Sicherungszustand und/oder in den Einkupplungsbereitschaftszustand verantwortlich sind.

Eine besonders einfache und raumsparende Gestaltung erhält man dadurch, dass die Betätigungs- und Sicherungsmechanik einen Steuerhebel umfasst, welcher an dem Kupplungskörper durch eine erste Schwenkschiebeverbindung gelagert ist und mit dem schwenkbar gelagerten Zughaken durch eine zweite Schwenkschiebeverbindung verbunden ist, wobei die Übertotpunktfederung gegebenenfalls an dem Steuerhebel angreift.

Zur zusätzlichen Sicherung eindeutiger Bewegungsabläufe beim Ein- und Auskuppeln ist es dabei möglich, dass mindestens einer der Zustände: Sicherungszustand, Auskupplungsbereitschaftszustand, Einkupplungsbereitschaftszustand des Steuerhebels durch mindestens eine überwindbare Rastschwelle im Schiebebereich einer Schwenkschiebeverbindung gesichert ist.

Um sicherzustellen, dass die Hakenanhängerkupplung in der Einkupplungsstellung des Zughakens während des Arbeitsbetriebs unter allen Umständen verharrt, beispielsweise auch dann, wenn in der Kupplung eine Störung eintritt, ist mindestens ein Sekundärsicherungssystem vorgesehen, um den Zughaken in seiner Einkupplungsstellung und/oder die Betätigungs- und Sicherungsmechanik in ihrem Sicherungszustand zu sichern.

Eine einfache Ausführungsform eines Sekundärsicherungssystems besteht darin, dass dieses einen Sicherungsbolzen umfasst, welcher in eine Sicherungsstellung durch eine Sicherungsfeder vorgespannt und gegen die Wirkung der Sicherungsfeder aus der Sicherungsstellung zurückstellbar ist.

Um die Handbetätigung des Sicherungsbolzens auf dessen Rückzug zur Vorbereitung des Auskuppelns zu beschränken und danach keine weiteren Handeingriffe erforderlich zu machen, wird vorgeschlagen, dass der Sicherungsbolzen aus seiner Sicherungsstellung in eine Haltestellung überführbar und in dieser zeitweise festhaltbar ist und dass die Rückkehr des Sicherungsbolzens in seine Sicherungsstellung durch die Bewegung des Zughakens und/oder der Betätigungs- und Sicherungsmechanik zwangsläufig auslösbar ist, spätestens dann, wenn der Zughaken in seine Einkupplungsstellung und/oder die Betätigungs- und Sicherungsmechanik in ihren Sicherungszustand zurückkehrt.

Dieser Gedanke lässt sich in der Praxis besonders vorteilhaft so ausbilden, dass der Sicherungsbolzen durch Axialverschiebung und anschliessende Drehung jeweils gegen die Wirkung der Sicherungsfeder aus der Sicherungsstellung in die durch eine Halterast bestimmte Haltestellung überführbar ist und durch den Zughaken bei dessen Übergang in die Auskupplungsstellung oder durch einen Teil der Betätigungs- und Sicherungsmechanik bei dessen Übergang in den Einkupplungsbereitschaftszustand aus dieser Halterast aushebbar ist, derart, dass er in eine zurückgezogene Sicherungsbereitschaftsstellung zurückdreht, in der er sodann durch den Zughaken oder den Teil der Betätigungs- und Sicherungsmechanik solange gehalten wird, bis der Zughaken in die Einkupplungsstellung bzw. der Teil der Betätigungs- und Sicherungsmechanik in den Sicherungszustand zurückgekehrt ist.

Die beiliegenden Figuren erläutern die Erfindung anhand eines Ausführungsbeispiels; es stellen dar

Figur 1 eine erfindungsgemässe Hakenanhängerkupplung, im folgenden einfach Kupplung genannt, im eingekuppelten und gesicherten Zustand;

Figur 2 die Kupplung nach Figur 1 in einem Auskupplungsbereitschaftszustand;

Figur 3 die Kupplung nach Figur 1 in einem Zwischenzustand des Auskupplungsvorgangs;

Figur 4 die Kupplung nach Figur 1 in einem weiteren Zwischenzustand des Auskupplungsvorgangs;

Figur 5 die Kupplung nach Figur 1 in einem weiteren Zwischenzustand des Auskupplungsvorgangs;

Figur 6 die Kupplung nach Figur 1 in einem weiteren Zwischenzustand des Auskupplungsvorgangs;

Figur 7 die Kupplung nach Figur 1 in dem Zustand völliger Auskupplung und damit erneuter Einkupplungsbereitschaft;

Figur 8 die Kupplung nach Figur 1 bei Beginn der Einkupplung;

Figur 9 die Kupplung nach Figur 1 in einem weiteren Zwischenzustand des Einkupplungsvorgangs;

Figur 10 die Kupplung nach Figur 1 in einem weiteren Zwischenzustand des Einkupplungsvorgangs;

Figur 11 eine konstruktive Ausführungsform der Kupplung in dem Zustand gemäss Figur 1;

Figur 12 die Ausführungsform gemäss Figur 11 in dem Zustand gemäss Figur 2;

Figur 13 die Ausführungsform gemäss Figur 11 in dem Zustand gemäss Figur 7;

Figur 14 die Kupplung gemäss Figur 11 in Draufsicht;

Figur 15 eine Abwandlung gegenüber Figur 1 bezüglich der Ansteuerung und

Figur 16 ein Detail zu Figur 15 an der Stelle XVI in perspektivischer Darstellung.

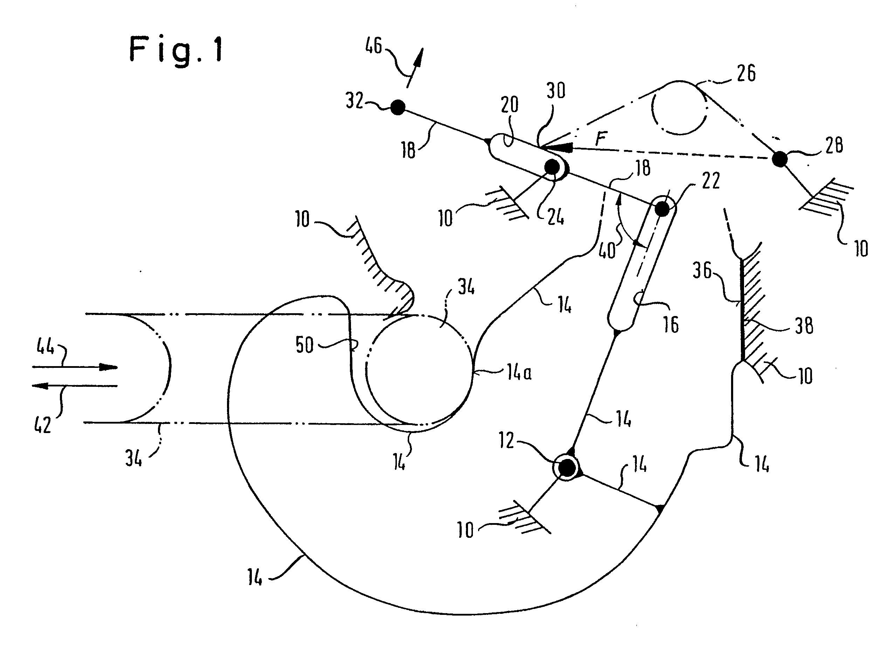

In Figur 1 ist ein Kupplungskörper durch Schraffuren bei 10 angedeutet. An dem Kupplungskörper ist ein Zughaken um eine Schwenkachse 12 schwenkbar gelagert. Der Zughaken ist durch eine Konturlinie angedeutet und mit 14 bezeichnet. An dem Zughaken ist ein Langloch 16 angebracht. Ein Steuerhebel ist mit 18 bezeichnet und mit einem Langloch 20 ausgeführt. Dieser Steuerhebel ist mit dem Langloch 20 auf einem am Kupplungskörper 10 festangeordneten Gelenkkopf 24 geführt unter Bildung einer Schwenkschiebeverbindung 20,24. Ein Gelenkkopf 22 des Steuerhebels 18 und das Langloch 16 des Zughakens 14 bilden eine Schwenkschiebeverbindung 16,22.

An dem Steuerhebel 18 greift eine Schenkelfeder 26 an, die bei 28 an dem Kupplungskörper 10 schwenkbar gelagert ist und bei 30 mit dem Steuerhebel 18 gelenkig verbunden ist. An dem Steuerhebel 18 ist ein Handgriff 32 angebracht.

In der Figur 1 befindet sich der Zughaken 14 in seiner Einkupplungsstellung. Eine Zugöse 34 ist in den Zughaken 14 eingekuppelt. Der Zughaken 14 ist gegen Drehung im Uhrzeigersinn durch einen Anschlag 36 gesichert, der an einem Gegenanschlag 38 des Kupplungskörpers anliegt. Gegen Drehung im Gegenzeigersinn d.h. im Sinne der Auskupplung ist der Zughaken durch den Steuerhebel 18 gesichert und zwar wie folgt: Der Steuerhebel 18 schliesst mit dem Langloch 16 einen Winkel 40 ein, der kleiner ist als 90 Grad. Wenn der Zughaken 14 sich im Gegenzeigersinn drehen will, so liegt der Gelenkkopf 22 gegen das obere Ende des Langlochs 16 an und das Langloch 20 liegt mit seinem rechten Ende gegen den ortsfesten Gelenkkopf 24 an. Der Winkel 40 will sich verkleinern. Damit ist eine sichere Verriegelung gegen Öffnen unter einer Auszugwirkung der Zugöse in Pfeilrichtung 42 gewährleistet. Diese Sicherung ist noch durch die Schenkelfeder 26 unterstützt, die mit ihrer Kraft F auf den Steuerhebel 18 ein linksdrehendes Drehmoment ausübt im Sinne der Andrückung des Gelenkkopfes 22 gegen das obere Ende des Langlochs 16.

Bei Einfahrdruck der Zugöse 34 in Pfeilrichtung 44 will sich der Zughaken 14 im Uhrzeigersinn drehen und liegt mit seinem Anschlag 36 gegen den ortsfesten Anschlag 38 an.

Es sei nun angenommen, dass die Zugöse 34 einen Einfahrdruck in Pfeilrichtung 44 auf die Flanke 14a des Zughakens ausübt, d.h. ein Moment im Uhrzeigersinn um die Schwenkachse 12 und dass dieses Moment durch das Zusammenwirken der Anschläge 36 und 38 aufgenommen wird. Es sei weiter angenommen, dass die Absicht besteht, die Kupplung auszukuppeln, während die Zugöse 34 diesen Einfahrdruck auf den Zughaken 14 ausübt. Diese Situation ist nicht theoretisch: Es kann durchaus vorkommen, dass auf einer abfallenden Strasse das Fahrzeug zum Stillstand kommt und dass nach Einlegen der Bremsen sowohl im Zugfahrzeug als auch im Anhänger der Anhänger noch einen Einfahrdruck über die Deichsel und die Zugöse auf den Zughaken ausübt und dass das Zugfahrzeug dann unter fortgesetzter Abbremsung des Anhängers abgekuppelt und weggefahren werden soll. In diesem Zustand ist der Zughaken 14 durch den von der Zugöse 34 auf ihn ausgeübten Einfahrdruck in seiner Stellung gemäss Figur 1 blockiert. Man beachte, dass die Flanke 14a beim Schwenken des Zughakens 14 im Gegenzeigersinn der zu einer Auskupplung führen sollte, sich wegen ihrer Lage zu der Schwenkachse 12 in Figur 1 nach links bewegen müsste, diese Bewegung nach links aber durch die anliegende Zugöse 34 blockiert ist. Das Auskuppeln ist trotzdem möglich, wie sich aus dem Folgenden ergibt:

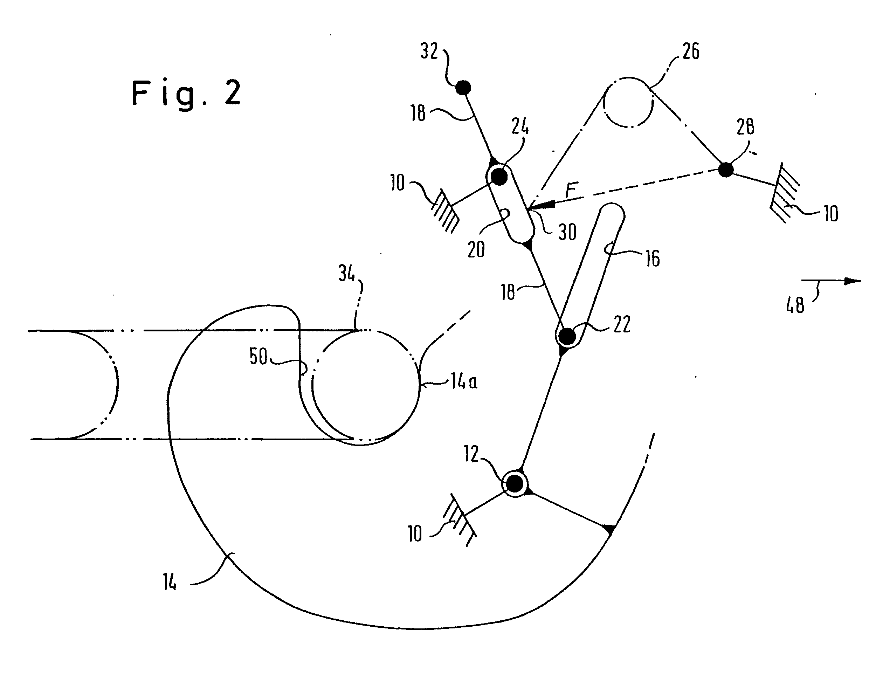

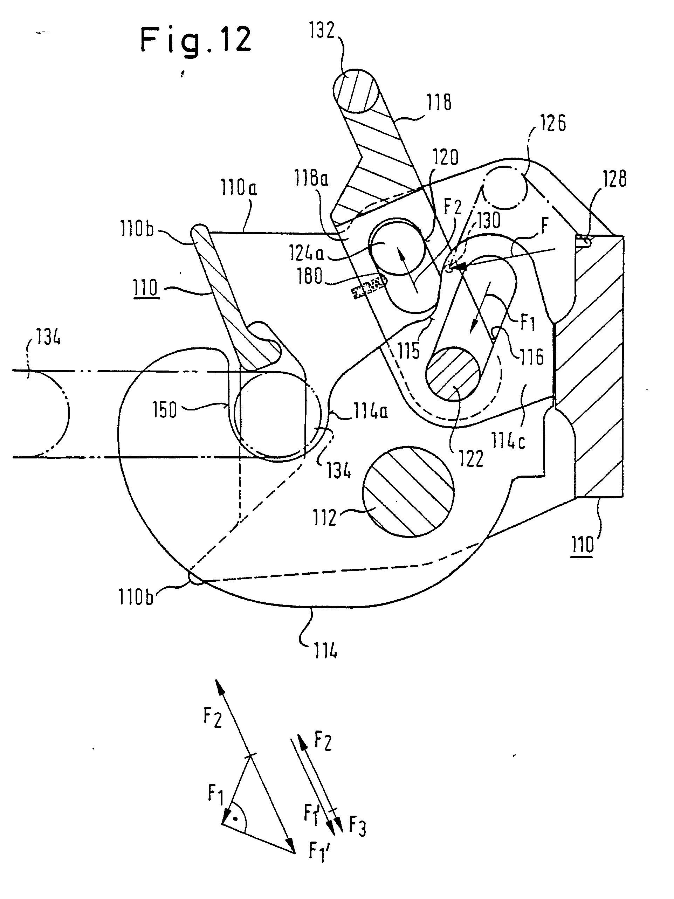

Es wird der Steuerhebel 18 in Pfeilrichtung 46 verschwenkt. Dabei stellt sich der Zustand gemäss Figur 2 ein. In diesem Zustand befindet sich der Zughaken 14 nach wie vor in der Einkupplungsstellung. Der Steuerhebel 18 hat sich jedoch in einen Auskupplungsbereitschaftszustand eingestellt und wird in diesem Auskupplungsbereitschaftszustand durch die Schenkelfeder 26 stabil gehalten; man kann sich dies etwa so vorstellen, dass die Federkraft F auf den Steuerhebel 18 ein rechtsdrehendes Moment ausübt, so dass wegen der Einstellung des Langlochs 16 der Gelenkkopf 22 nach unten und links in das untere Ende des Langlochs 16 einfallen will. Im einzelnen sind die Kräfteverhältnisse in Verbindung mit der den gleichen Zustand darstellenden Figur 12 beschrieben. Ist dieser Zustand gemäss Figur 2 erreicht, so kann also der Bedienungsmann die Hand vom Steuerhebel 18 wieder wegnehmen und der Steuerhebel bleibt gleichwohl in dem Auskupplungsbereitschaftszustand gemäss Figur 2.

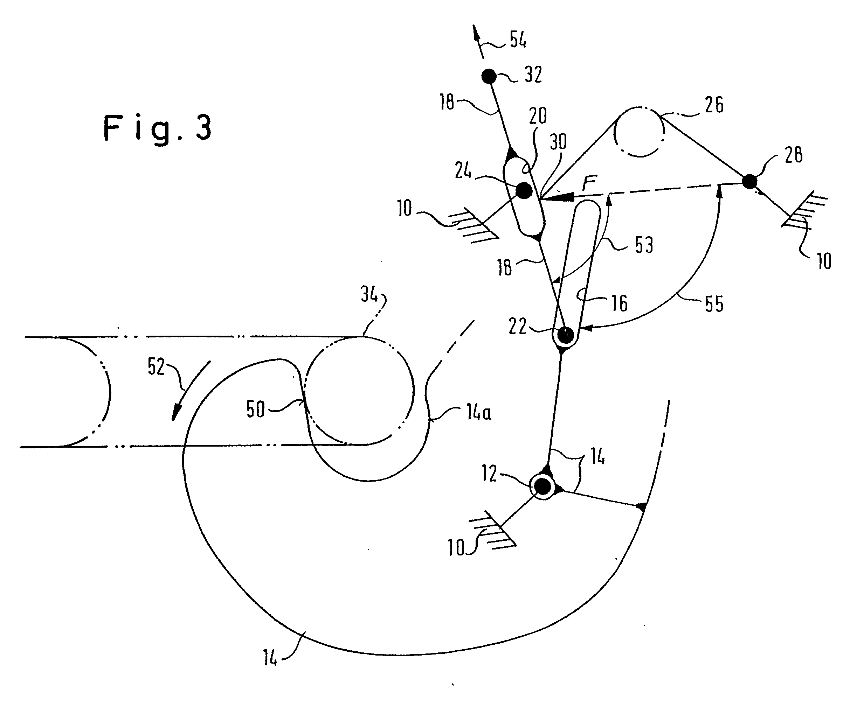

Wenn nun das Zugfahrzeug mit dem Zughaken 14 in Pfeilrichtung 48 nach rechts fährt, so hört der Einfahrdruck der Zugöse 34 auf die Flanke 14a des Zughakens 14 auf und die Zugöse 34 kommt in Anlage gegen die Flanke 50 des Zughakens 14 wie in Figur 3 dargestellt ist. Der Zughaken 14 kann beim Übergang von Figur 2 nach Figur 3 in Pfeilrichtung 52 um die Schwenkachse 12 schwenken. Dabei behält der Gelenkkopf 22 zunächst (Figur 3) noch seine Position im unteren Ende des Langlochs 16 bei. Der zwischen der Federkraft F und dem Steuerhebel 18 eingeschlossene Winkel 53 behält seine Grösse (von unter 90 Grad) in etwa bei, während der zwischen dem Steuerhebel 18 und dem Langloch 16 eingeschlossene Winkel 55 kleiner und der Kraftangriffspunkt der Federkraft F zum Gelenkkopf 24 hin verschoben wird, so dass eine Kraft in Pfeilrichtung 54 entsteht, die den Steuerhebel 18 nach oben zu schieben sucht. Das Abfallen des Zughakens 14 wird noch durch die Schwerkraft unterstützt.

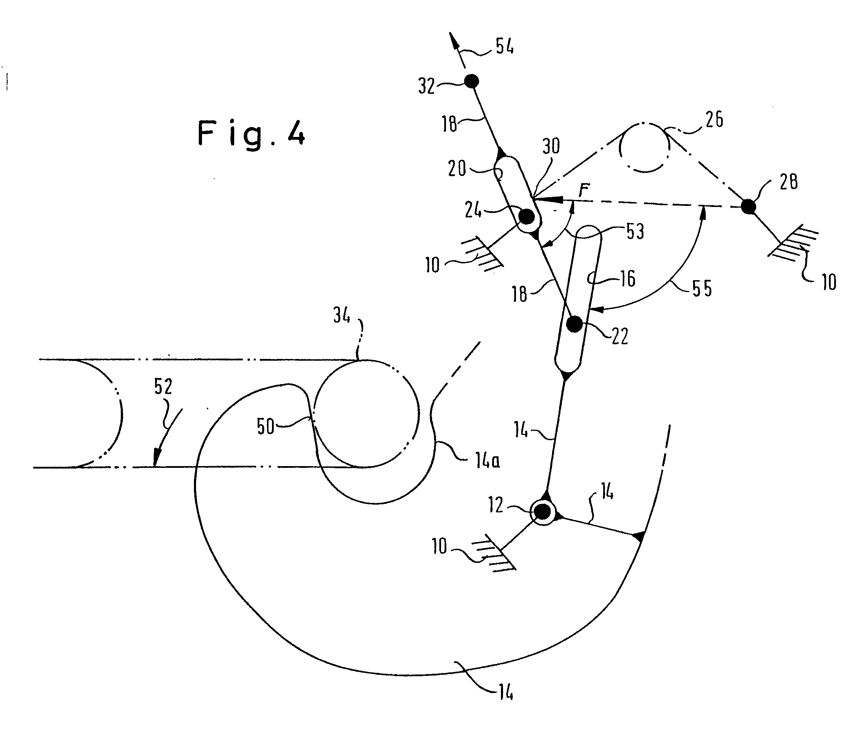

In Figur 4 ist dargestellt, dass der Steuerhebel 18 nach oben getreten ist, so dass das untere Ende des Langlochs 20 an dem ortsfesten Gelenkkopf 24 anliegt.

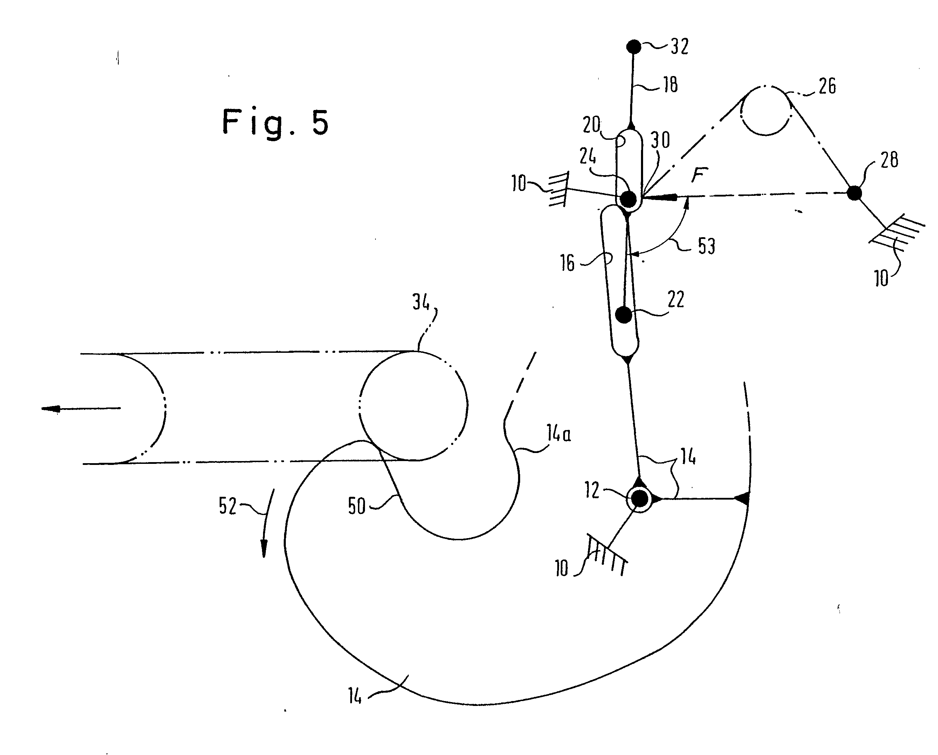

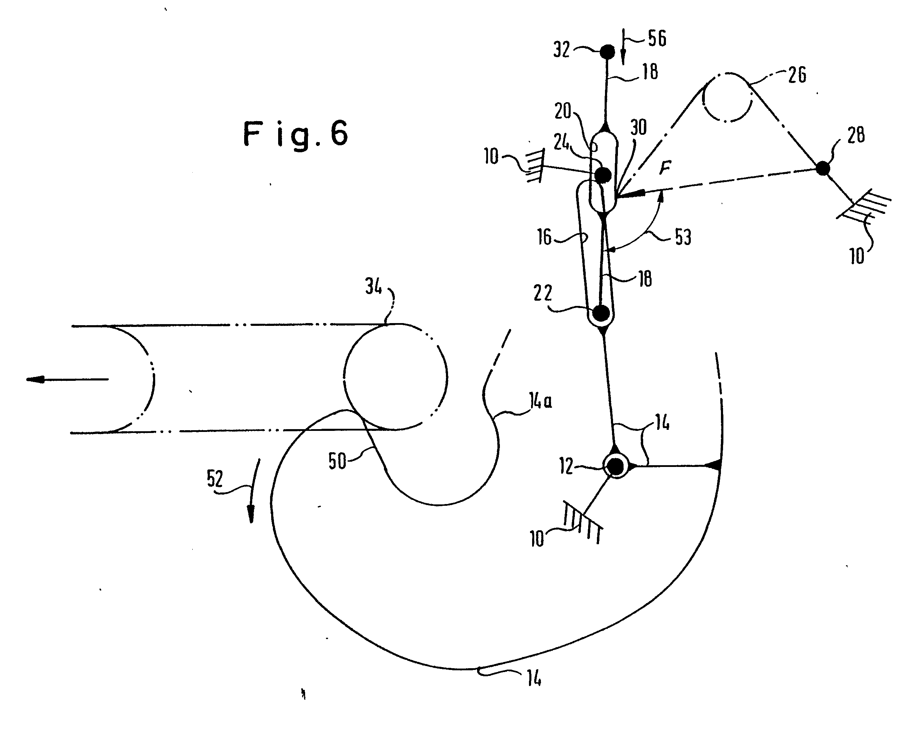

Bewegt sich der Zughaken 14 noch weiter im linksdrehenden Sinn gemäss Pfeil 52, wie durch den Übergang von Figur 4 nach Figur 5 dargestellt, so tritt ein weiterer indifferenter Zustand ein, in dem die auf den Steuerhebel 18 gerichtete aufwärts wirkende Kraft kleiner geworden ist (vgl. Winkel 53 der wieder grösser geworden ist und den Federkraftangriffspunkt der nahe am Gelenkkopf 24 liegt, wodurch sich eine Veränderung des Winkels 53 - im möglichen Schwenkbereich des Zughakens 14 - auf die Bewegungsrichtung des Steuerhebels 18 wesentlich stärker auswirkt als eine Veränderung des Winkels 55). In Figur 6 ist der Steuerhebel 18 dann wieder in Pfeilrichtung 56 nach unten gefallen und liegt mit seinem Gelenkkopf 22 gegen das untere Ende des Langlochs 16 an.

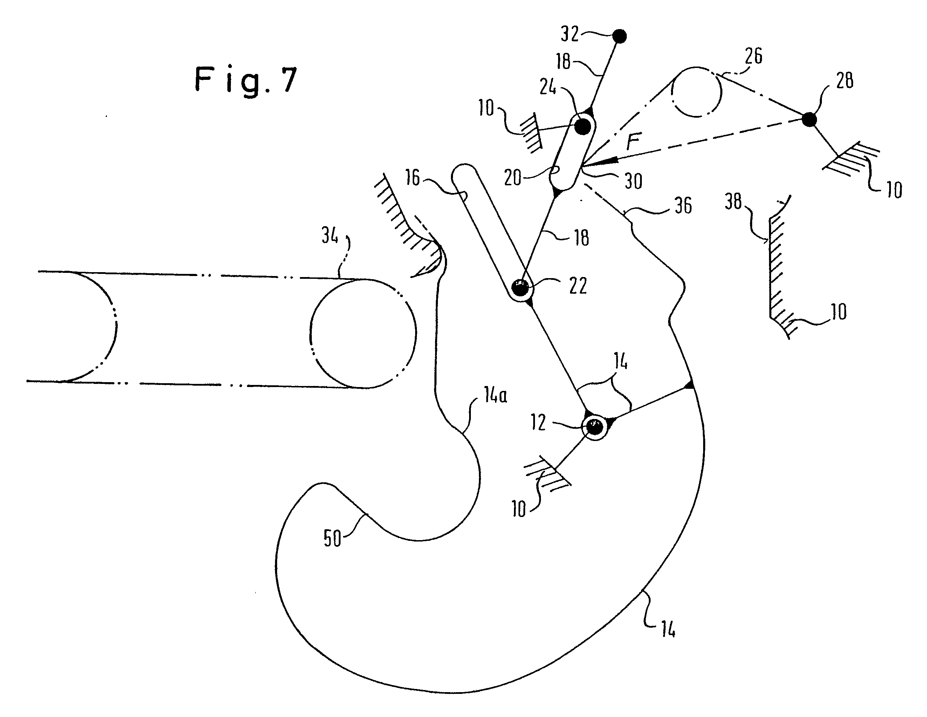

In Figur 7 ist schliesslich die volle Auskupplungsstellung des Zughakens 14 erreicht. Die Federkraft F hält den Steuerhebel 18 immer noch nach unten, so dass der Gelenkkopf 22 am unteren Ende des Langlochs 16 anliegt. Der Zughaken 14 befindet sich in der voll ausgekuppelten Stellung. Das ganze System ist wieder einkupplungsbereit.

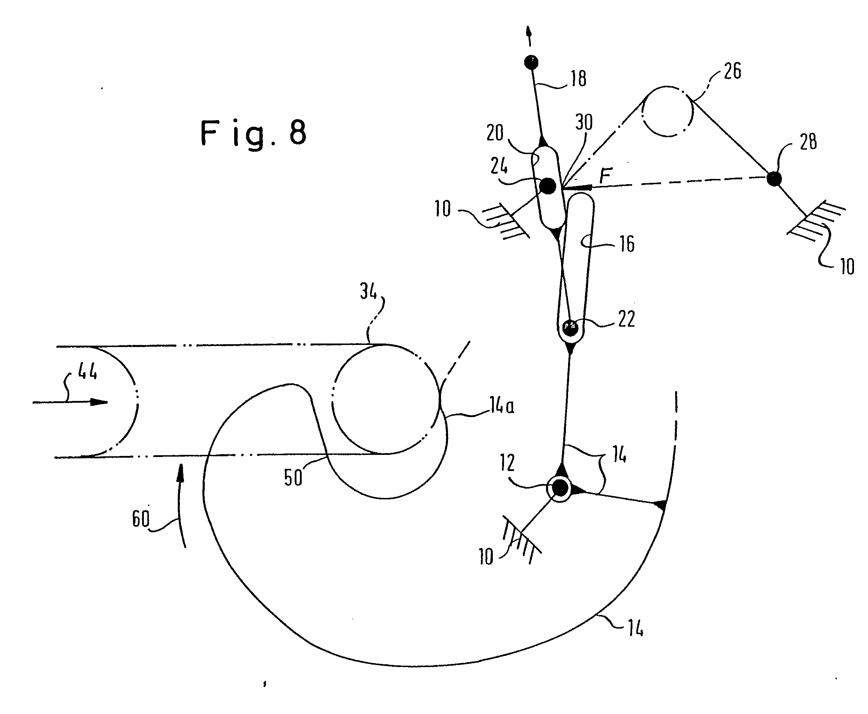

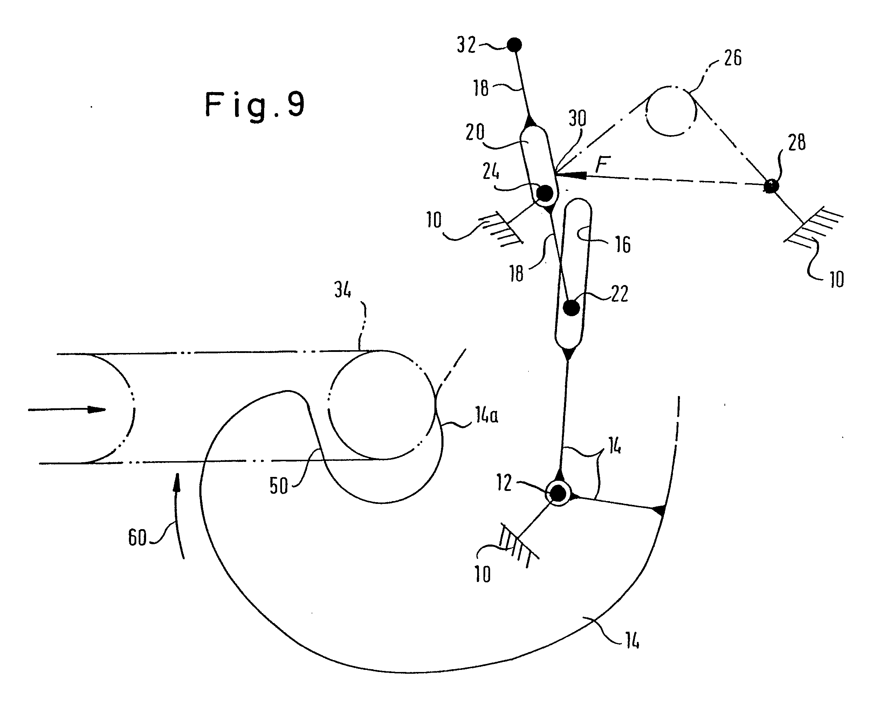

In Figur 8 hat die erneute Einkupplung begonnen. Die Zugöse 34 ist in Pfeilrichtung 44 wieder nach vorne gefahren gegen die Flanke 14a des Zughakens 14. Der Zughaken 14 hat eine Schwenkung um die Gelenkachse 12 in Pfeilrichtung 60 begonnen. Der Steuerhebel 18 nimmt aber immer noch seine untere Position ein, in welcher der Gelenkkopf 22 am unteren Ende des Langlochs 16 anliegt. Die Stellung des Steuerhebels 18 entspricht indes, wie aus der Lage der Kraft F zu ersehen, hier wieder einem indifferenten Gleichgewicht, so dass bei geringfügiger Weiterbewegung des Zughakens 14 in Pfeilrichtung 60, wie aus Figur 9 zu ersehen, der Steuerhebel 18 unter der Wirkung der Federkraft F wieder nach oben geht und mit dem unteren Ende des Langlochs 20 dann wieder an dem ortsfesten Gelenkpunkt 24 zur Anlage kommt. In dieser Stellung gemäss Figur 9 nimmt demnach der Steuerhebel 18 wieder eine Position ein, die insofern der Figur 1 entspricht, als der Steuerhebel 18 mit dem unteren Ende seines Langlochs 20 an dem Gelenkkopf 24 anliegt.

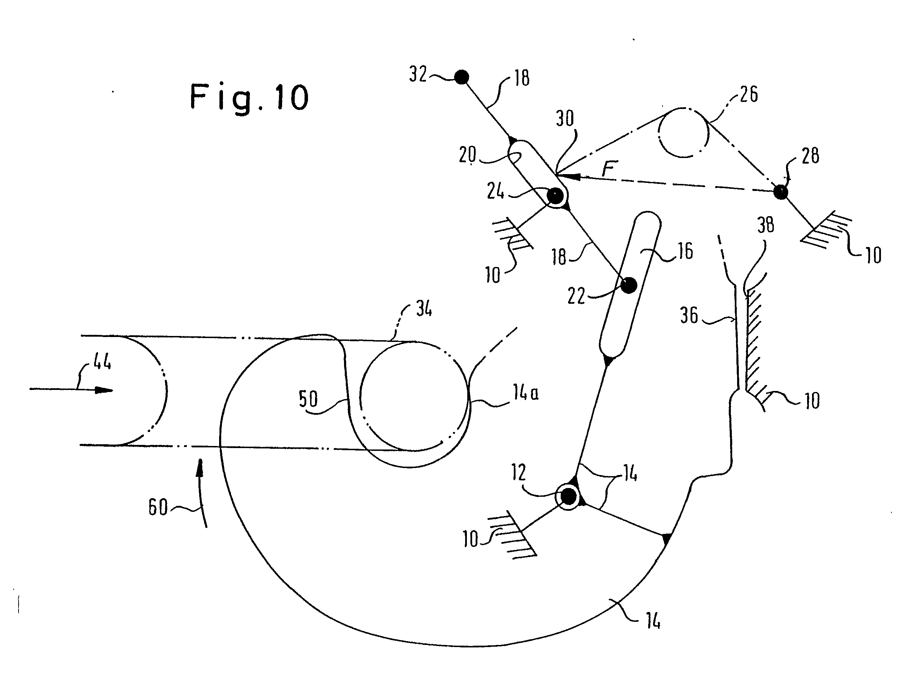

In Figur 10 ist der Zughaken 14 noch weiter in Pfeilrichtung 60 auf seine Einkupplungsstellung hin verschwenkt worden und der Steuerhebel 18 liegt nach wie vor mit dem unteren Ende seines Langlochs 20 an seinem ortsfesten Gelenkkopf 24 an, was auch aus der Lage der Federkraft F in Figur 10 ohne weiteres einsichtig ist.

Aus der Stellung der Figur 10 heraus geht der Zughaken 14 schliesslich wieder in die Stellung der Figur 1 über und der Steuerhebel 18 ebenfalls in den Zustand der Figur 1.

Man erkennt aus der vorstehenden Beschreibung, dass bei der Rückkehr des Zughakens 14 aus der Auskupplungsstellung gemäss Figur 7 in die Einkupplungsstellung der Figur 1 der Steuerhebel 18 den Zustand gemäss Figur 2 nicht durchläuft, so dass ohne Handeingriff an dem Steuerhebel 18 dieser in den Sicherungszustand gemäss Figur 1 zurückkehrt, allein aufgrund des Verschwenkens des Zughakens 14 durch die einfahrende Zugöse 34 und die gleichzeitige Einwirkung der Federkraft F. Wenn man ausgehend vom Zustand der Figur 1 den Steuerhebel 18 in Richtung auf den Zustand der Figur 2 bewegt, jedoch vor Erreichen des Zustandes der Figur 2 die Bewegung in Pfeilrichtung 46 beendet, so fällt der Steuerhebel 18 in den Zustand der Figur 1 zurück. Es empfiehlt sich , die Systempunkte so zu legen, dass die indifferente Zwischenstellung des Steuerhebels 46 zwischen den Zuständen der Figur 1 und Figur 2 erst relativ kurz vor dem Erreichen des Zustandes der Figur 2 eintritt. Dies ist deshalb von Bedeutung, weil dadurch verhindert wird, dass der Steuerhebel 18 beim Übergang vom Zustand der Figur 7 in den Zustand der Figur 1 in einer stabilen Zwischenstellung, etwa entsprechend der Figur 2, hängenbleibt.

Geht man wieder von der Position der Figur 1 aus, ohne dass jedoch die Zugöse 34 eingekuppelt ist, so kann man den Steuerhebel ohne Unterbrechung bis in den Zustand der Figur 7 überführen und der Zughaken 14 geht dabei in einem Zug unter der Wirkung der auf ihn einwirkenden Schwerkraft in den Zustand der Figur 7 über.

Man erkennt, dass zum Überführen des Zughakens aus dem Zustand der Figur 1 in den Zustand der Figur 7 unter den bisher beschriebenen Umständen eine übermässige Krafteinwirkung an dem Steuerhebel 18 von Hand nicht angelegt werden muss.

Geht man von dem Zustand der Figur 1 aus und will man auskuppeln, während die Zugöse 34 in Abweichung von Figur 1 an der Flanke 14 unter Zug in Pfeilrichtung 42 anliegt, so wird ein grösserer Krafteinsatz notwendig, weil bei der Verschwenkung des Steuerhebels 18 der in Figur 1 weniger als 90 Grad betragende Winkel 40 dann zunächst die 90-Grad-Position durchläuft, was einer geringfügigen Verschwenkung des Zughakens 14 im Uhrzeigersinn entspricht, einer Verschwenkung also, die zu einem zunehmenden Zug des Zughakens 14 auf die Zugöse 34 in Pfeilrichtung 44 führt. Da aber die ursprüngliche Abweichung des Winkels 40 von 90 Grad in der Regel sehr klein gehalten wird, ist es möglich, das Ausrücken des Steuerhebels 18 mit einiger Kraftanstrengung ohne Einsatz ungewöhnlicher Mittel zu vollziehen.

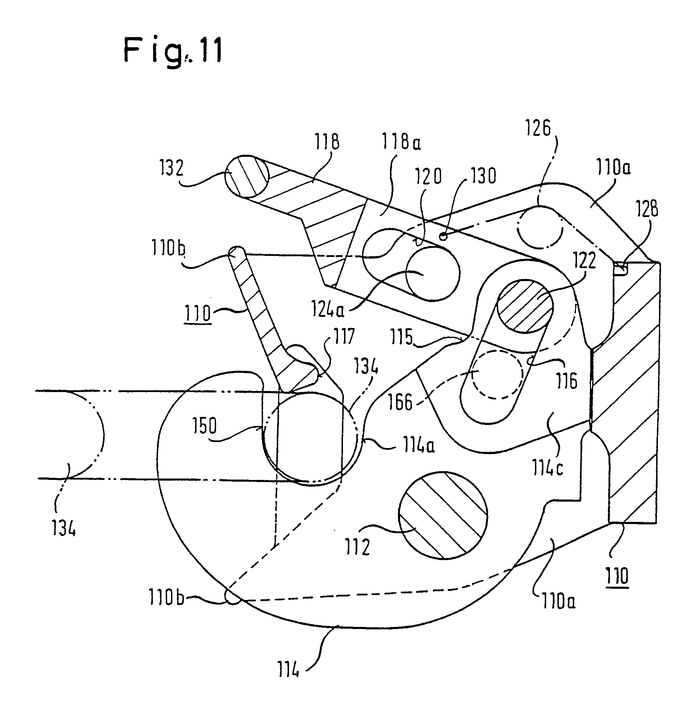

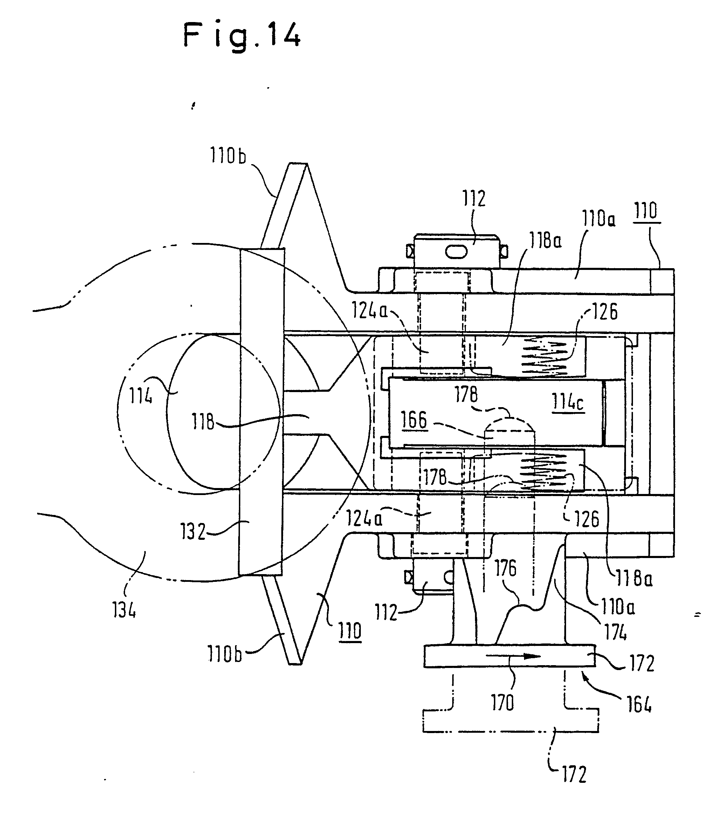

In Figur 11 und Figur 14 ist die in den Figuren 1 bis 10 nur schematisch dargestellten Ausführungsform der Kupplung im einzelnen dargestellt. Analoge Teile sind mit gleichen Bezugzeichen versehen wie Figur 1, vermehrt durch die Zahl 100.

Der Zughaken 114 ist durch einen durchgehenden Bolzen 112 gelagert, der in den beiden Gehäusehälften 110a des Kupplungskörpers 110 gelagert ist. Der Zughaken 114 weist einen Zughakensteg 114c auf, in dessen Bereich das Langloch 116 angeordnet ist. Dieser Steg 114c greift zwischen zwei Schenkel 118a des Steuerhebels 118 ein. Je ein Langloch 120 ist in den beiden Schenkeln 118a angeordnet. In die beiden Langlöcher 120 greift je ein Bolzen 124a ein, die in den Gehäusehälften 110a gelagert sind. Man erkennt ein Kupplungsmaul 110b. In der ausgekuppelten Stellung liegt der Zughaken 114 mit einer Anschlagfläche 115 an einer Gegenanschlagfläche 117 des Kupplungskörpers 110 an.

In Figur 14 ist eine Sekundärsicherung 164 zu erkennen. Diese Sekundärsicherung umfasst einen Sicherungsbolzen 166, welcher in dem Einkupplungszustand gemäss Figur 11 in das Langloch 116 eingreift. Damit steht dieser Sicherungsbolzen 166 einerseits in unmittelbarem Eingriff mit dem Zughaken 114 und ausserdem sperrt er die Bewegung der Schwenkschiebeverbindung 116, 122. Dies hat den Vorteil, dass selbst dann, wenn ein Bruch im Bereich des Steuerhebels 118 eingetreten sein sollte, der Zughaken 114 durch den Sicherungsbolzen 166 immer noch gesichert ist.

Der Sicherungsbolzen 166 steht unter der Wirkung einer nicht eingezeichneten Druck- und Drehfeder, welche ihn in die gestrichelte Stellung gemäss Figur 14 vorzuschieben und in Pfeilrichtung 170 zu verdrehen sucht. Der Sicherungsbolzen 166 ist mit einem Drehgriff 172 und mit einem Haltevorsprung 174 versehen. Zur Vorbereitung des Auskuppelns wird der Handgriff 172 in die strich-/doppelpunktierte Stellung gemäss Figur 14 gezogen und entgegen der Pfeilrichtung 170 verdreht, so dass der Haltevorsprung 174 in eine Haltemulde 176 des Kupplungskörpers einfällt. Dann nimmt der Sicherungsbolzen 166 die strich-/doppelpunktierte Stellung gemäss Figur 14 ein, in der nur noch die Kalotte 178 in den Weg des einen Schenkels 118a des Steuerhebels 118 hineinragt. Wird dann, ausgehend von dem Zustand der Figur 11, der Steuerhebel 118 in den Zustand der Figur 12 entsprechend der Figur 2 verschwenkt, so drückt der Schenkel 118a den Sicherungsbolzen 166 so weit zurück, dass der Vorsprung 174 aus der Haltemulde 176 ausgeschoben wird und der Sicherungsbolzen 166 sich unter der Wirkung der nicht eingezeichneten Feder in Pfeilrichtung 170 zurückdreht, ohne zunächst wieder in die gestrichelt eingezeichnete Stellung zurückfallen zu können. Er verbleibt vielmehr in einer Sicherungsbereitschaftsstellung und kann erst dann wieder in die Sicherungsstellung einfallen, wenn der Einkupplungszustand gemäss Figur 11 bzw. Figur 1 erreicht ist.

In Figur 12 ist die Kupplung gemäss Figur 11 in dem Zustand gemäss Figur 2 dargestellt. Man erkennt wieder die Federkraft F, die von der Schenkelfeder 126 ausgeht.

Aus dieser Federkraft F ergeben sich in Richtung der Langlöcher 116 und 120 wirkende Kräfte F1 und F2, nämlich eine Kraft F1, die an den den Gelenkkopf bildenden Bolzen 122 des Steuerhebels 118 angreift und mit der Kraftkomponente $F1'$ nach unten wirkt und eine Kraft F2, die an dem Steuerhebel 118 angreift und nach oben wirkt. Aus der Addition der beiden Kräfte $F1'$ und F2 ergibt sich eine resultierende Kraft F3.

Die Abwärtsrichtung der Kraft F3 macht deutlich, dass in dem Zustand der Figur 12 der Steuerhebel 118 nach unten gedrückt wird, wobei die Abwärtskraftwirkung noch durch das Gewicht des Steuerhebels 118 unterstützt wird. Damit ist abgeleitet, was aus der Figur 2 bereits unmittelbar ersichtlich ist, dass nämlich der Steuerhebel 118 in Figur 2 eine stabile Position einnimmt, wobei die Stabilisierung teils auf der Wirkung der Schenkelfeder 126, teils auf der Schwerkraft des Steuerhebels 118 beruht. Die in Figur 12 vorgenommene Kräftezerlegung lässt sich natürlich auch in anderen Zuständen durchführen. Dabei ergeben sich je nach Lage unterschiedliche Richtungen der Kraft F3, die für die verschiedenen Zustände in den Figuren 1 bis 10 verantwortlich sind.

Der Zustand gemäss Figur 12 kann noch durch eine elastische Rastschwelle zusätzlich gesichert werden, die in Figur 12 etwa in der Mitte des Langlochs 120 dargestellt und mit 180 bezeichnet ist. Aufgrund ihrer Lage kann diese Rastschwelle auch den Zustand gemäss Figur 1 zusätzlich sichern und ebenso den Zustand gemäss Figur 7.

Bei Vorhandensein der Rast 180 ist in dem Zustand der Figur 12 eine Abwärtsrichtung der Kraft F3 nicht mehr unbedingt erforderlich. Die Kraft F 3 könnte dann auch zu Null werden oder aufwärts gerichtet sein, was den selbsttätigen Übergang des Steuerhebels 118 beim Einkuppeln in seinen Sicherungszustand noch begünstigen könnte.

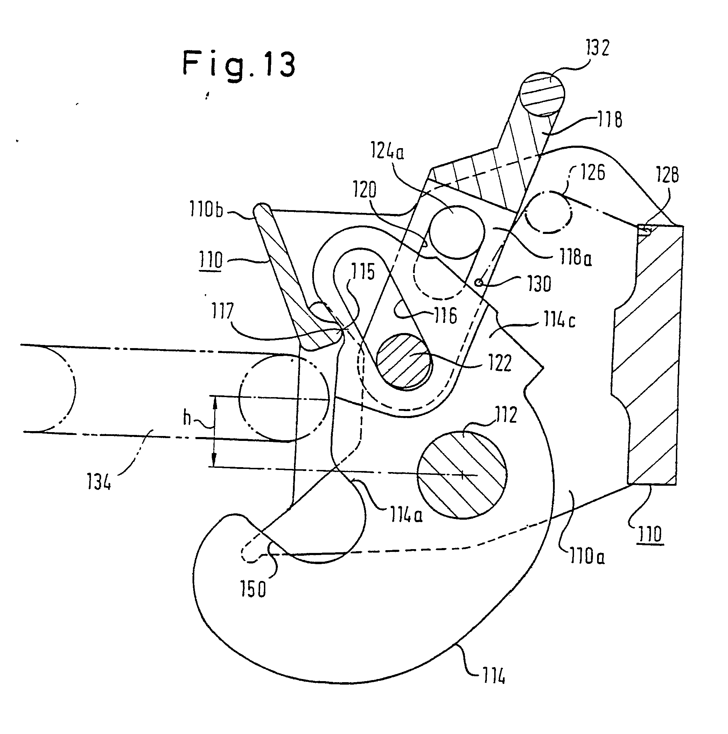

In Figur 13 ist der Zustand entsprechend Figur 7 dargestellt. Man erkennt hier, dass nunmehr die Anschläge 115 und 117 die Lage des Zughakens bestimmen.

Man erkennt in Figur 13, dass die Zugöse 134 beim Aufstossen auf den Zughaken 114 einen günstigen Hebelarm h gegenüber der Schwenkachse 112 besitzt, so dass der Zughaken 114 zuverlässig in die Einkupplungsstellung verschwenkt wird. Dabei ist zu bemerken, dass die Zugöse 134 die in Figur 13 bezeichnete Position durch Führungsmittel des Kupplungskörpers zwangsläufig einnimmt.

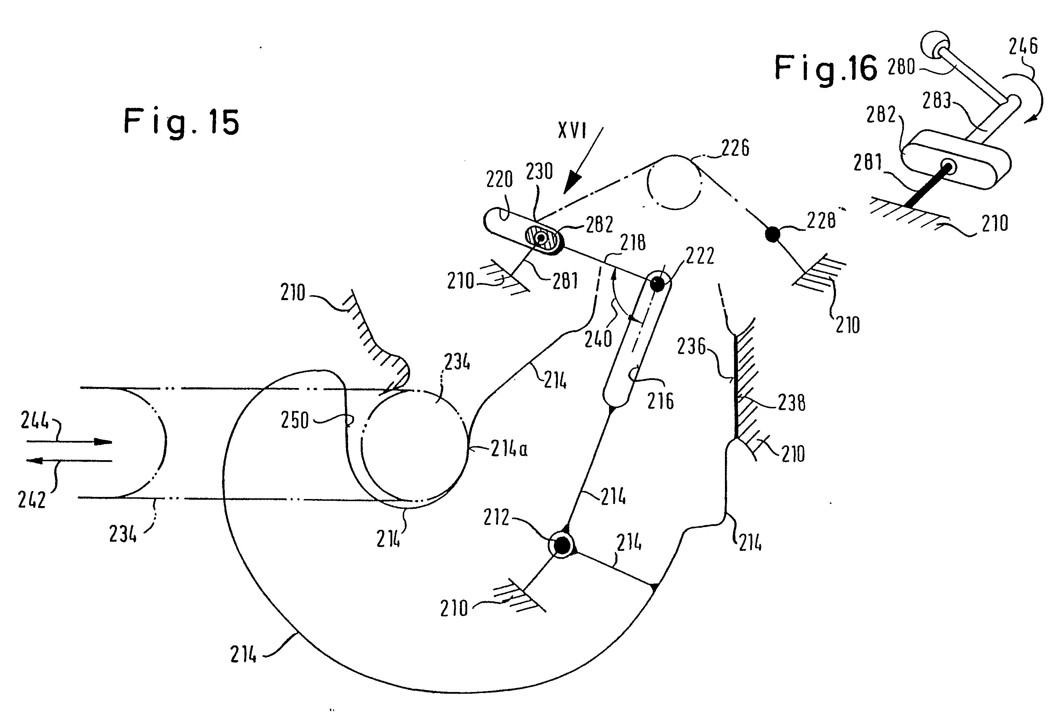

In Figur 15 ist eine Abwandlung gegenüber Figur 1 dargestellt. Gleiche Teile sind mit Bezugszeichen bezeichnet wie in Figur 1 jeweils vermehrt um die Zahl 200. Der einzige Unterschied gegenüber der Ausführungsform nach Figur 1 besteht darin, dass der Handgriff 32 entfallen ist. Stattdessen greift in das Langloch 220 ein unrunder Gleitstein 282 ein, der um eine gegenüber dem Kupplungskörper 210 ortsfeste Achse 281 drehbar und längs des Langlochs 220 verschiebbar ist. Dieser Gleitstein 282 ist mit einer Steuerwelle 283 fest verbunden, an der ein Handgriff 280 sitzt. Durch Drehen des Handgriffs 280 in Richtung des Pfeiles 246 können die gleichen Vorgänge ausgelöst werden, die in der Figur 1 durch ein an den Handgriff 32 angelegtes Betätigungsmoment ausgelöst werden können. Steht der Zughaken 214 unter Einfahrdruck der Zugöse 234, so dass der Zughaken 214 gehindert wird, seine Auskupplungsstellung einzunehmen, so zwingt das Drehmoment, welches der Gleitstein 282 auf den Steuerhebel 218 ausübt, diesen Steuerhebel 218 dazu, die Auskupplungsbereitschaftsstellung einzunehmen entsprechend Figur 12. Man kann daraus ersehen, dass sich diese Ausführungsform in der Funktion nicht von der Ausführungsform nach Figur 1 unterscheidet. Der einzige Unterschied liegt in der unterschiedlichen Ansteuerung des Steuerhebels 18 bzw. 218.

**Ansprüche**

1. Hakenanhängerkupplung mit einem Kupplungskörper (10), einem in dem Kupplungskörper (10) um eine Schwenkachse (12) zwischen einer Einkupplungsstellung (Figur 1) und einer Auskupplungsstellung (Figur 7) schwenkbaren Zughaken (14) und einer Betätigungs- und Sicherungsmechanik (18) für den Zughaken (14),
wobei der zum Ankuppeln einer Zugöse (34) bestimmte und ausgebildete Zughaken (14) durch Eingriff mit der Zugöse (34) zwischen der Einkupplungsstellung (Figur 1) und der Auskupplungsstellung (Figur 7) verschwenkbar ist, und zwar so, dass die einfahrende Zugöse (34) eine Verschwenkung des Zughakens (14) in Richtung Einkupplungsstellung (Figur 1) bewirkt und die ausfahrende Zugöse (34) und/oder die Schwerkraft eine Verschwenkung des Zughakens (14) in Richtung Auskupplungsstellung (Figur 7) bewirkt,
wobei weiter der Zughaken (14) in der Einkupplungsstellung(Fig.1) durch die dann in einem Sicherungszustand befindliche Betätigungs- und Sicherungsmechanik (18) sicherbar ist,
wobei weiter die Betätigungs- und Sicherungsmechanik (18) durch Einwirken einer äusseren Lösekraft (46) aus dem Sicherungszustand (Figur 1) ausrückbar und als Folge hiervon der Zughaken (14) in die Auskupplungsstellung (Figur 7) überführbar ist,

wobei weiter in der Auskupplungsstellung (Figur 7) des Zughakens (14) die Betätigungs- und Sicherungsmechanik (18) in einem Einkupplungsbereitschaftszustand ist

und wobei als Folge des Zurückstellens des Zughakens (14) in die Einkupplungsstellung (Figur 1) die Betätigungs- und Sicherungsmechanik (18) aus dem Einkupplungsbereitschaftszustand (Figur 7) in den Sicherungszustand (Figur 1) überführbar ist,

dadurch gekennzeichnet,

dass die Betätigungs- und Sicherungsmechanik (18) in ihrer Verbindung mit dem Zughaken (14) kinematisch derart unterbestimmt ist, dass sie bei durch Zugöseneinfahrdruck bewirkter Blockierung des Zughakens (14) in seiner Einkupplungsstellung (Figur 1) durch die Lösekraft (46) in einen stabilen Auskupplungsbereitschaftszustand (Figur 2) einstellbar ist, welcher zwischen ihrem Sicherungszustand (Figur 1) und ihrem Einkupplungsbereitschaftszustand (Figur 7) gelegen ist,

dass in dem Auskupplungsbereitschaftszustand (Figur 2) der Betätigungs- und Sicherungsmechanik (18) der Zughaken (14) frei ist für eine durch Aufhebung des Zugöseneinfahrdrucks auszulösende Überführung in seine Auskupplungsstellung (Figur 7),

dass durch eine solche Überführung des Zughakens (14) in die Auskupplungsstellung (Figur 7) die Betätigungs- und Sicherungsmechanik (18) selbsttätig in den Einkupplungsbereitschaftszustand (Figur 7) überführbar ist

und dass der Eintritt, jedenfalls aber das Verharren der Betätigungs- und Sicherungsmechanik (18) in den stabilen Auskupplungsbereitschaftszustand (Figur 2) bei ihrem Übergang von ihrem Einkupplungsbereitschaftszustand (Figur 7) in ihren Sicherungszustand (Figur 1) unterdrückt ist.

2. Hakenanhängerkupplung nach Anspruch 1,
dadurch gekennzeichnet,

dass bei fehlendem Zugöseneinfahrdruck auf den in Einkupplungsstellung befindlichen Zughaken (14) die Betätigungs- und Sicherungsmechanik (18) von dem Sicherungszustand (Figur 1) bis in den Einkupplungsbereitschaftszustand (Figur 7) durchstellbar ist unter gleichzeitiger Überführung des Zughakens (14) aus der Einkupplungsstellung (Figur 1) in die Auskupplungsstellung (Figur 7).

3. Hakenanhängerkupplung nach einem der Ansprüche 1 und 2,
dadurch gekennzeichnet,

dass Stabilisierungsmittel in Form einer Übertotpunktfederung (26) vorgesehen sind, welche in Zusammenwirken mit dem durch Zugöseneinfahrdruck in der Einkupplungsstellung blokkierten Zughaken (Figur 2) den Auskupplungsbereitschaftszustand der Betätigungs- und Sicherungsmechanik (18) festlegen, gegebenenfalls aber auch für die Einstellung der Betätigungs- und Sicherungsmechanik (18) in den Sicherungszustand (Figur 1) und/oder in den Einkupplungsbereitschaftszustand (Figur 7) verantwortlich sind.

4. Hakenanhängerkupplung nach einem der Ansprüche 1 bis 3,
dadurch gekennzeichnet,

dass die Betätigungs- und Sicherungsmechanik einen Steuerhebel (18) umfasst, welcher an dem Kupplungskörper (10) durch eine erste Schwenkschiebeverbindung (20, 24) gelagert ist und mit dem Zughaken (14) durch eine zweite Schwenkschiebeverbindung (16, 22) verbunden ist, wobei die Übertotpunktfederung (26) gegebenenfalls an dem Steuerhebel (18) angreift.

5. Hakenanhängerkupplung nach Anspruch 4,
dadurch gekennzeichnet,

dass mindestens einer der Zustände: Sicherungszustand (Figur 1)- ,Auskupplungsbereitschaftszustand (Figur 2), Einkupplungsbereitschaftszustand (Figur 7) des Steuerhebels (18) durch mindestens eine überwindbare Rastschwelle (180 - Figur 12) im Schiebebereich einer Schwenkschiebeverbindung (20, 24) gesichert ist.

6. Hakenanhängerkupplung nach einem der Ansprüche 1 bis 5,
dadurch gekennzeichnet,

dass mindestens ein Sekundärsicherungssystem (164) vorgesehen ist, um den Zughaken (114) in seiner Einkupplungsstellung (Figur 11) und/oder die Betätigungs- und Sicherungsmechanik (118) in ihrem Sicherungszustand (Figur 11) zu sichern.

7. Hakenanhängerkupplung nach Anspruch 6,
dadurch gekennzeichnet,

dass das Sekundärsicherungssystem (164) einen Sicherungsbolzen (166) umfasst, welcher in eine Sicherungsstellung (Figur 14 gestrichelt) durch eine Sicherungsfeder vorgespannt und gegen die Wirkung der Sicherungsfeder aus der Sicherungsstellung zurückstellbar ist.

8. Hakenanhängerkupplung nach Anspruch 7,
dadurch gekennzeichnet,

dass der Sicherungsbolzen (166) aus seiner Sicherungsstellung (Figur 14 gestrichelt) in eine Haltestellung (Figur 14 strich-/doppelpunktiert) überführbar und in dieser zeitweise festhaltbar ist und dass die Rückkehr des Sicherungsbolzens (166) in seine Sicherungsstellung (Figur 14 gestrichelt) durch die Bewegung des Zughakens und/oder der Betätigungs-und Sicherungsmechanik (118) zwangsläufig auslösbar ist, spätestens dann, wenn der Zughaken (114) in seine Einkupplungsstellung (Figur 11) und/oder die Betätigungs- und Sicherungsmechanik (118) in ihren Sicherungszustand (Figur 11) zurückkehrt.

9. Hakenanhängerkupplung nach Anspruch 8, dadurch gekennzeichnet, dass der Sicherungsbolzen (166) durch Axialverschiebung und anschliessende Drehung jeweils gegen die Wirkung der Sicherungsfeder aus der Sicherungsstellung (Figur 14 gestrichelt) in die durch eine Halterast (176) bestimmte Haltestellung (Figur 14 strich-/doppelpunktiert) überführbar ist und durch den Zughaken bei dessen Übergang in die Auskupplungsstellung oder durch einen Teil (118a) der Betätigungs- und Sicherungsmechanik (118) bei dessen Übergang in den Einkupplungsbereitschaftszustand (Figur 13) aus dieser Halterast (176) aushebbar ist, derart, dass er in eine zurückgezogene Sicherungsbereitschaftsstellung zurückdreht, in der er sodann durch den Zughaken oder den Teil (118a) der Betätigungs- und Sicherungsmechanik (118) solange gehalten wird, bis der Zughaken in die Einkupplungsstellung bzw. der Teil (118a) der Betätigungs- und Sicherungsmechnik (118) in den Sicherungszustand (Figur 11) zurückgekehrt ist.

10. Hakenanhängerkupplung nach einem der Ansprüche 7 bis 9, dadurch gekennzeichnet, dass der Sicherungsbolzen (166) in seiner Sicherungsstellung (Figur 11 und 14) sowohl mit dem Zughaken (114) als auch mit dem Betätigungs- und Sicherungshebel (118) in Eingriff steht.

11. Hakenanhängerkupplung nach Anspruch 10, dadurch gekennzeichnet, dass der Sicherungsbolzen (166) in seiner Sicherungsstellung (Figur 11 und 14) in ein der Schwenkschiebeverbindung (116, 122) zwischen Zughaken (114) und Steuerhebel (118) zugehöriges Langloch (116) des Zughakens (114) eingreift und damit gleichzeitig den Zughaken und diese Schwenkschiebeverbindung (116, 122) blockiert.

Fig.1

EP 0 389 875 A2

Fig. 2

Fig. 3

Fig. 4

# Fig. 5

EP 0 389 875 A2

Fig. 6

EP 0 389 875 A2

Fig. 7

# Fig. 8

EP 0 389 875 A2

Fig. 9

# Fig.10

EP 0 389 875 A2

# Fig. 11

Fig.12

# Fig.13

# Fig.14

Fig. 15

Fig. 16

EP 0 389 875 A2